# EUROPÄISCHE PATENTSCHRIFT

(11) **EP 0 460 122 B1**
(45) Veröffentlichungstag und Bekanntmachung des Hinweises auf die Patenterteilung: **29.12.1993**
(21) Anmeldenummer: 90911615.4
(22) Anmeldetag: 15.08.1990
(51) Int. Cl.: B01D 61/14, B05D 1/02, B05B 15/12, C09D 7/00

(54) **VERFAHREN ZUM UMWELTSCHONENDEN FARBSPRITZLACKIEREN MIT EINER DISPERSION VON OFENTROCKNENDEM LACK IN WASSER**
PROCESS FOR NON-POLLUTING SPRAY PAINTING WITH A DISPERSION OF OVEN-DRYING PAINT IN WATER
PROCEDE DE PEINTURE PAR PULVERISATION MENAGEANT L'ENVIRONNEMENT, AU MOYEN D'UNE DISPERSION DANS L'EAU D'UN VERNIS A SECHAGE AU FOUR

(30) Priorität: 22.12.1989 CH 4615/89
(43) Veröffentlichungstag der Anmeldung: 11.12.1991
(73) Patentinhaber: UNICOLOR AG, CH-8853 Lachen (CH)
(72) Erfinder: SCHLUMPF, Georg, CH-9100 Herisau (CH); WEPF, Hanspeter, CH-8500 Frauenfeld (CH)
(74) Vertreter: Köver, François
(86) Internationale Anmeldenummer: CH9000192
(87) Internationale Veröffentlichungsnummer: WO9109666

(56) Entgegenhaltungen:
- EP-A- 0 032 554
- EP-A- 0 117 586
- EP-A- 0 271 015
- EP-A-01 411 71
- DE-A- 2 353 469
- DE-A- 2 945 523
- DE-A- 3 428 300

## Beschreibung

Die Erfindung betrifft ein Verfahren zum Farbspritzlackieren mit einer aus einem in Wasser dispergierten Lack bestehenden Spritzzusammensetzung in einem Farbspritzstand, der mit einer Kabine mit wasserberieselter Rückwand zum Auffangen und Auswaschen von Lacküberschuss (Overspray) in Kabinenabwasser versehen ist, wobei das gesamte Kabinenabwasser durch Ultrafiltration in einer Ultrafiltrationseinrichtung in Permeat und lackhaltigen Rückstand aufgeteilt wird und dabei der lackhaltige Rückstand in der Ultrafiltrationseinrichtung durch Wasserentzug aus dem Kabinenabwasser an Lack angereichert wird, bis sein Lackgehalt im wesentlichen gleich demjenigen von frisch dem Farbspritzstand zugeführter Dispersion ist, der so an Lack angereicherte Rückstand der frisch zugeführten Dispersion beigegeben wird, um zum Farbspritzlackieren wiederverwendet zu werden, und das Permeat dem Farbspritzstand rückgeführt wird.

Ein Verfahren dieser Art ist beispielsweise aus DE-A-3428300 bekannt. Bei diesem Verfahren wird der Lacküberschuss durch Ultrafiltration aus dem Kabinenabwasser entfernt, anschliessend wird das Lackmaterial wieder aufbereitet und wiederverwendet. Die Aufbereitung des Lackmaterials zum Zwecke seiner Wiederverwendung im Farbspritzstand umfasst zumindest eine Eindickung, was bedeutet, dass das aus dem Ultrafilter kommende Lackmaterial nicht ohne Zwischenbehandlung im Farbspritzstand wiederverwendbar ist. Im Hinblick auf die Problematik der Aufbereitung des Lackmaterials zum Zwecke seiner Wiederverwendung im Farbspritzstand ist aber aus DE-A-3428300 nichts anderes zu entnehmen als nur ein Hinweis auf die Eindickung.

Ein sehr ahnliches Verfahren ist beispielsweise aus EP-A-0141171 bekannt. Aus EP-A-0141171 ist zwar nur der Einsatz von Filtration ohne näheren Hinweis auf Ultrafiltration zu entnehmen, hingegen wird die Aufbereitung des Lackmaterials zum Zwecke seiner Wiederverwendung im Farbspritzstand ziemlich ausführlich beschrieben. Es stellt sich dabei heraus, dass diese Aufbereitung des Lackmaterials weit über die in DE-A-3428300 erwähnte Eindickung hinausgeht und offensichtlich aufwendig ist. Wenn die Konzentration des Lacküberschusses (Overspray) im Kabinenabwasser etwa 20 % erreicht, wird ein Teilstrom des Kabinenabwasser-Kreislaufes durch eine Filtrationseinrichtung geführt, um in Filtrat und lackhaltigen Rückstand aufgeteilt zu werden. Das Filtrat besteht aus gereinigtem Wasser und wird dem Farbspritzstand zur Wasserberieselung der Kabinenrückwand rückgeführt. Am lackhaltigen Rückstand werden verschiedene Parameter wie beispielsweise die Leitfähigkeit gemessen, um die Filtration so zu steuern, dass die gemessenen Parameter denjenigen der frisch zugeführten Dispersion etwa gleich sind. Dann wird der so an Lack angereicherte Rückstand einer frisch zugeführten Dispersion beigemischt und somit zum Farbspritzlackieren wiederverwendet. Der Lacküberschuss (Overspray) ist im Kabinenabwasser nicht stabil, und es wird in EP-A-0141171 sogar präzisiert, dass das Gemisch über Dispergierer geführt werden muss, um es temporär zu stabilisieren. Ausserdem wird bei diesem Verfahren nur ein Teilstrom des Kabinenabwasser-Kreislaufes behandelt, folglich benötigt die Einrichtung ein entsprechendes Leitungs- und Steurungssystem.

Traditionell, d.h. gemäss dem Stand der Technik vor den Dokumenten DE-A-3428300 und EP-A-0141171, wird der Lacküberschuss (Overspray) der Entsorgung zugeführt, was die Umwelt sehr stark belastet und ausserdem sehr aufwendig ist. So ist beispielsweise ein Bindemittel für einen ofentrocknenden, in Wasser dispergierbaren Lack aus EP-A-0032554 bekannt: die Entsorgung eines solchen Bindemittels belastet die Umwelt sehr stark, da es phosphorhaltig ist. Auch sind besondere Massnahmen zu treffen, um das Verkleben der zum Abscheiden des Lacküberschusses aus dem Kabinenabwasser verwendeten Vorrichtungen zu vermeiden, vgl. dazu beispielsweise DE-A-3704683.

Das Aufteilen von Kabinenabwasser durch Ultrafiltration in Permeat und lackhaltigen Rückstand ist beispielsweise aus EP-A-0307047, EP-A-0245863, EP-A-0137877 oder EP-A-0127685 bekannt. Dabei ist beispielsweise aus EP-A-0318827 oder EP-A-0271015 bekannt, dass das Permeat zu entsäuern ist, bevor es dem Farbspritzstand rückgeführt werden kann. Diese beiden Aspekte des Stands der Technik werden zusammen in EP-A-0217212 berücksichtigt.

Versuche zur Rückgewinnung des Lackes aus dem Lacküberschuss (Overspray) in Kabinenabwasser werden in "Oberfläche + JOT" 5/1987, Seite 36 erwähnt, jedoch darin als "nur in besonderen Fällen erfolgversprechend" bezeichnet. In "Oberfläche + JOT" 2/1988, Seiten 24-25, werden Lack- und Lösemittelkreisläufe in der Spritzkabine mit der Bezeichnung "zukünftig" qualifiziert, während die Rückgewinnung des Lacks durch besondere Aufbereitung als bekannt erwähnt wird. Auch DE-A-3800980 erwähnt die Rückgewinnung des Lacks durch Aufbereitung.

In "Oberfläche + JOT" 5/1988, Seiten 61-63, sind die Verwendung von Aminen zur Verhinderung der Koaleszenz von ofentrocknendem Lack und die zusätzliche Reinigung des Kabinenabwassers durch Umkehrosmose nach dessen Aufteilung in Permeat und lackhaltigen Rückstand erwähnt. Ferner wird in dieser Veröffentlichung die Rückgewinnung des Lackes aus dem Lacküberschuss (Overspray) als "erst in Ansätzen entwickelt" bezeichnet.

Aus JP-A-49-51324 ist bekannt, mittels Ultrafiltration den lackhaltigen Rückstand durch Wasserentzug aus dem gesamten Kabinenabwasser an Lack anzureichern und den so an Lack angereicherten Rückstand zum Farbspritzlackieren wiederzuverwenden. Es wird empfohlen, deionisiertes Wasser zu verwenden, um eine Verunreinigung der Dispersion zu vermeiden, es wird aber ausdrücklich darauf hingewiesen, dass auch Leitungswasser verwendet werden kann.

Demgegenüber ist es Aufgabe der Erfindung, ein Verfahren der eingangs erwähnten Art anzugeben, mit welchem die Aufbereitung des Lackmaterials zum Zwecke seiner Wiederverwendung im Farbspritzstand weniger aufwendig ist als beim vorbekannten Stand der Technik, bzw. mit welchem die erforderliche Stabilität des Kabinenabwassers und des an Lack angereicherten Rückstands erreicht wird und im Dauerbetrieb aufrechterhalten bleibt.

Diese Aufgabe wird erfindungsgemäss gelöst durch das im Anspruch 1 angegebene Verfahren. Vorteilhafte Weiterbildungen der Erfindung ergeben sich aus den abhängigen Ansprüchen.

Der Hauptvorteil des erfindungsgemässen Verfahrens liegt in der Entlastung der Umwelt durch die wesentliche Reduktion der zu entsorgenden Stoffe dank der erfindungsgemässen Wiederverwendung von Permeat und lackhaltigem Rückstand in einem über den Farbspritzstand führenden geschlossenen Kreislauf. Ein weiterer Vorteil ist darin zu sehen, dass die erwähnte Wiederverwendung von Permeat und lackhaltigem Rückstand in wirtschaftlicher Hinsicht optimal ist.

Nachstehend wird die Erfindung anhand der Zeichnung näher erläutert. Es zeigen:
- Fig. 1: ein Schema eines über den Farbspritzstand führenden geschlossenen Kreislaufs für die Ausübung des erfindungsgemässen Verfahrens auf kontinuierliche Weise, und
- Fig. 2: ein Schema eines über den Farbspritzstand führenden geschlossenen Kreislaufs für die diskontinuierliche Ausübung des erfindungsgemässen Verfahrens in Chargen (Batch-Verfahren).

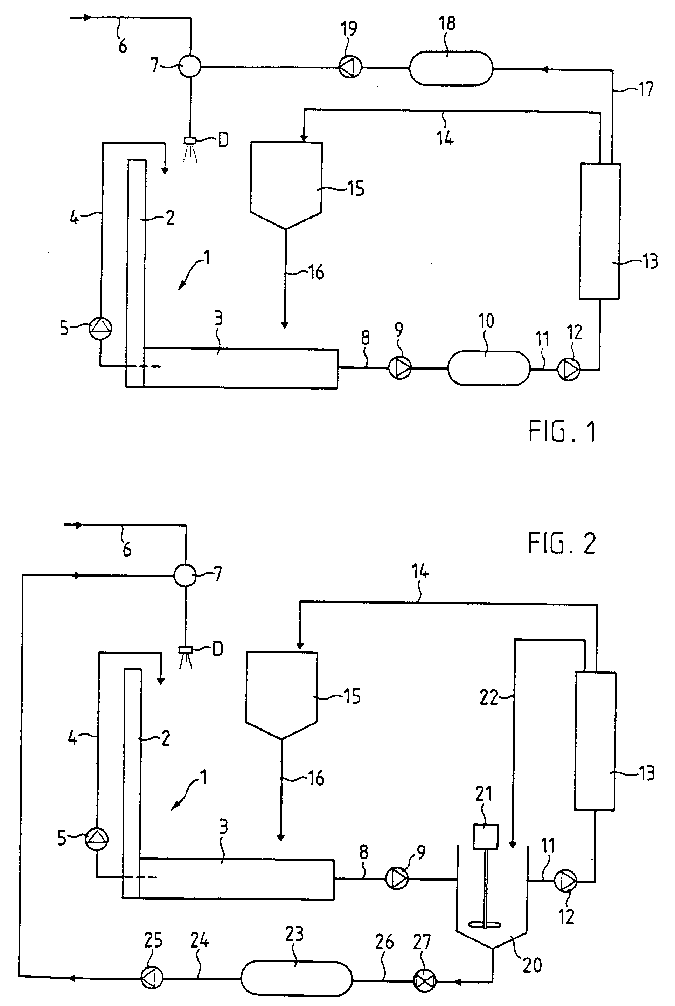

In den Fig. 1 und 2 ist ein an sich wohlbekannter Farbspritzstand mit einer Kabine 1, einer wasserberieselten Rückwand 2 und einer Wanne 3 sowie einer Berieselungsleitung 4 mit zugeordneter Pumpe 5 dargestellt. Die Berieselung der Rückwand dient auf bekannte Weise zum Auffangen und Auswaschen von Lacküberschuss (Overspray) in Wasser, das als Kabinenabwasser in der Wanne 3 aufgefangen wird.

Frische Dispersion von ofentrocknendem Lack in Wasser wird dem Farbspritzstand über eine Leitung 6 und eine Vereinigung 7 zugeführt und in der Düse D versprüht.

In Fig. 1 wird das Kabinenabwasser über die Ableitung 8 mit zugeordneter Pumpe 9 zu einem Zwischenspeicher 10 und von dort über eine Leitung 11 mit zugeordneter Pumpe 12 zu einer Ultrafiltrationseinrichtung 13 geführt. In der Ultrafiltrationseinrichtung 13 wird das Kabinenabwasser in Permeat und lackhaltigen Rückstand aufgeteilt. Das Permeat wird dem Farbspritzstand über die Leitung 14, den Zwischenspeicher 15 und die Leitung 16 rückgeführt.

In Fig. 2 wird das Kabinenabwasser über die Ableitung 8 mit zugeordneter Pumpe 9 zu einem mit einem Rührer 21 versehenen Zwischenspeicher 20 und von dort über eine Leitung 11 mit zugeordneter Pumpe 12 zu einer Ultrafiltrationseinrichtung 13 geführt. In der Ultrafiltrationseinrichtung 13 wird das Kabinenabwasser in Permeat und lackhaltigen Rückstand aufgeteilt. Das Permeat wird dem Farbspritzstand über die Leitung 14, den Zwischenspeicher 15 und die Leitung 16 rückgeführt.

In Fig. 1 wird der lackhaltige Rückstand aus der Ultrafiltration von der Ultrafiltrationseinrichtung 13 über die Leitung 17 zu einem Zwischenspeicher 18 und von dort mit Hilfe der Pumpe 19 zur Vereinigung 7 geführt.

In Fig. 2 wird der lackhaltige Rückstand aus der Ultrafiltration von der Ultrafiltrationseinrichtung 13 über die Leitung 22 zurück zum Zwischenspeicher 20 geführt. Vom Zwischenspeicher 20 führt eine Abflussleitung 26 über ein Absperrventil 27 zu einem Zwischenspeicher 23 und von dort über eine Leitung 24 mit zugeordneter Pumpe 25 zur Vereinigung 7.

Somit wird in beiden Fällen der Fig. 1 und 2 der in der Ultrafiltrationseinrichtung 13 an Lack angereicherte Rückstand der Ultrafiltration zum Farbspritzlackieren in der Düse D wiederverwendet. Um diese Wiederverwendung zu ermöglichen werden ausserdem die nachstehend beschriebenen Massnahmen getroffen.

Der dem Farbspritzstand bei der Düse D zugeführten Dispersion wird eine Komponente zur Verhinderung der Koaleszenz des Lacks beigegeben, mit dem Zweck zu verhindern, dass sich der in der Anlage zirkulierende Lack absetzt und die Anlage verstopft. Diese Komponente wird dem Kabinenabwasser und/oder der dem Farbspritzstand zugeführten Dispersion beigegeben. Wegen der grossen Verdampfungsfläche und langen Verweildauer des Lacks im Kabinenabwasser im Zusammenhang mit der beschriebenen Rezirkulation wird vorzugsweise eine solche Komponente ausgewählt, die bei Raumtemperatur einen geringen Dampfdruck aufweist. Auf bekannte Weise wird eine solche Komponente aus der Gruppe der Amine ausgewählt, aber erfindungsgemäss ist diese Komponente aus einem oder mehreren aliphatischen Aminen mit einem durchschnittlichen Molekulargewicht von 75 bis 133, deren Gemischen und Derivaten ausgewählt. Als Beispiele solcher Stoffe können Isopropanolamin, Dimethylethanolamin, Diisopropanolamin und deren Gemische genannt werden.

Ferner wird der dem Farbspritzstand zugeführten Dispersion erfindungsgemäss eine Komponente zur Inhibition der Trocknung vor dem Ofentrocknen des Lacks beigegeben, mit dem Zweck zu verhindern, dass der in der Anlage zirkulierende Lack aushärtet (polymerisiert) und die Anlage unlöslich verklebt. Obschon solche Inhibitoren an sich wohlbekannt sind, wurden sie bisher nur im Zusammenhang mit einem lufttrocknendem Lack verwendet, denn es bestand gar kein Anlass, sie im Zusammenhang mit einem ofentrocknendem Lack zu verwenden. Erfindungsgemäss wird nun eine solche Komponente im Zusammenhang mit einem ofentrocknendem Lack verwendet. Als Beispiele solcher Stoffe können Ketoxime, Butoxime usw. und deren Gemische genannt werden.

Ausserdem wird dem Kabinenabwasser eine Komponente zur Einstellung des Durchsatzes bei der Ultrafiltration beigegeben, die ein Glykolderivat ist. Als Beispiele solcher Stoffe können Butylglykol, Butyldiglykol, Propylenglykole und dergleichen genannt werden.

Auch wird die Leitfähigkeit des dem Farbspritzstand frisch zugeführten Wassers überwacht und unterhalb eines Grenzwerts gehalten, mit dem Zweck zu verhindern, dass Ionen und insbesondere Calcium-Ionen den in der Anlage zirkulierenden Lack koagulieren und die Anlage dadurch verstopft wird. Vorzugsweise wird dem Farbspritzstand nur solches Wasser frisch zugeführt, das eine Leitfähigkeit von weniger als 10⁻⁴ Ω⁻¹cm⁻¹ aufweist. Diese Leitfähigkeit wird vorzugsweise durch Umkehrosmose erreicht. Das Frischwasser wird benötigt, wenn die Anlage erstmals aufgefüllt wird und auch, um die Verdampfungsverluste zu kompensieren.

Schliesslich wird, zum Erreichen der direkten Wiederverwendung, der lackhaltige Rückstand aus der Ultrafiltration durch Wasserentzug aus dem Kabinenabwasser an Lack angereichert, bis sein Lackgehalt im wesentlichen gleich demjenigen der frisch zugeführten Dispersion ist, so dass die wiedergewonnene Dispersion genauso spritzfähig ist wie frisch zugeführte Dispersion. Dies kann auf zwei Weisen erfolgen.

In der Ausführungsweise nach Fig. 1 erfolgt die Anreicherung des lackhaltigen Rückstands aus der Ultrafiltration kontinuierlich. Der bis zur Spritzfähigkeit an Lack angereicherte Rückstand der Ultrafiltration wird im wesentlichen kontinuierlich zum Farbspritzlackieren wiederverwendet, auch wenn er gegebenenfalls im Zwischenspeicher 18 zeitweise aufgehalten wird. Dazu ist die Kapazität der Ultrafiltrationseinrichtung 13 so dimensioniert, dass sie dem Kabinenabwasser Wasser mit einer im wesentlichen gleichen Geschwindigkeit entzieht, als Permeat dem Farbspritzstand zugeführt wird.

In der Ausführungsweise nach Fig. 2 erfolgt die Anreicherung des lackhaltigen Rückstands im wesentlichen diskontinuierlich, d.h. in Chargen (im Batch-Verfahren). Der Zwischenspeicher 20, die Ultrafiltrationseinrichtung 13 und die Leitungen 11 und 22 bilden mit Hilfe der Pumpe 12 einen Kreislauf, in dem die oben erwähnte Aufkonzentration des Lackgehalts erfolgt. Der bis zur Spritzfähigkeit an Lack angereicherte Rückstand wird vor seiner Wiederverwendung zum Farbspritzlackieren im Zwischenspeicher 23 zeitweise aufgehalten. Im Zwischenspeicher 23 kann der Farbton des Lacks nach Bedarf eingestellt werden.

Dabei kann die Kapazität der Ultrafiltrationseinrichtung 13 so dimensioniert werden, dass sie dem Kabinenabwasser Wasser mit einer kleineren Geschwindigkeit entzieht, als Permeat dem Farbspritzstand zugeführt wird. Typisch ist diese Ausführungsweise des erfindungsgemässen Verfahrens dazu geeignet, den Farbspritzstand während der normalen Arbeitszeit am Tage zu betreiben, wobei die Kapazität der Ultrafiltrationseinrichtung 13 so dimensioniert ist, dass der Rückstand der Ultrafiltration ausserhalb der Arbeitszeit und insbesondere während der Nachtzeit an Lack bis zur Spritzfähigkeit angereichert wird.

Zur Durchführung des erfindungsgemässen Verfahrens wird als Lack vorzugsweise ein Alkydharz oder eine Kombination von Alkyd- und Acrylharz verwendet, weil sich diese Stoffe in Kombination mit den anderen Massnahmen am besten eignen, um die weiter oben angegebene Aufgabe der Erfindung zu lösen.

Auch wird angestrebt, die noch verbleibende Umweltbelastung weiter herabzusetzen, indem die Verwendungsdauer des Kabinenabwassers zwischen Wasserwechseln, die sich wegen der Vermehrung von Mikroorganismen aufdrängen würden, verlängert wird. Dazu wird vorzugsweise der Dispersion und/oder dem Kabinenabwasser zusätzlich eine biozide Komponente beigegeben. Als Beispiele solcher Stoffe können Triazinderivate wie insbesondere Hexahydro-1,3,5-triazin und Benzylalkohol sowie dessen Derivate in Konzentrationen von 0,1-0,3 Vol.-% (bezogen auf das Volumen des Kabinenabwassers) genannt werden.

## Patentansprüche

1. Verfahren zum Farbspritzlackieren mit einer aus einem in Wasser dispergierten Lack bestehenden Spritzzusammensetzung in einem Farbspritzstand, der mit einer Kabine mit wasserberieselter Rückwand zum Auffangen und Auswaschen von Lacküberschuss (Overspray) in Kabinenabwasser versehen ist, wobei das gesamte Kabinenabwasser durch Ultrafiltration in einer Ultrafiltrationseinrichtung in Permeat und lackhaltigen Rückstand aufgeteilt wird und dabei der lackhaltige Rückstand in der Ultrafiltrationseinrichtung durch Wasserentzug aus dem Kabinenabwasser an Lack angereichert wird, bis sein Lackgehalt im wesentlichen gleich demjenigen von frisch dem Farbspritzstand zugeführter Dispersion ist, der so an Lack angereicherte Rückstand der frisch zugeführten Dispersion beigegeben wird, um zum Farbspritzlackieren wiederverwendet zu werden, und das Permeat dem Farbspritzstand rückgeführt wird, **dadurch gekennzeichnet, dass**
a) in der Spritzzusammensetzung ein ofentrocknender Lack eingesetzt wird,
b) der dem Farbspritzstand zugeführten Dispersion eine Komponente zur Verhinderung der Koaleszenz des Lacks beigegeben wird,
c) der dem Farbspritzstand zugeführten Dispersion eine Komponente zur Inhibition der Trocknung beigegeben wird,
d) dem Kabinenabwasser ein Glykolderivat als Komponente zur Einstellung des Durchsatzes bei der Ultrafiltration beigegeben wird, und
e) die Leitfähigkeit des dem Farbspritzstand rückgeführten Wassers überwacht und unterhalb eines Grenzwerts gehalten wird.

2. Verfahren nach Anspruch 1, dadurch gekennzeichnet, dass der Lack ein Alkydharz oder eine Kombination von Alkyd- und Acrylharz ist.

3. Verfahren nach Anspruch 1, dadurch gekennzeichnet, dass dem Farbspritzstand nur solches Wasser frisch zugeführt wird, das eine Leitfähigkeit von weniger als 10⁻⁴ Ω⁻¹cm⁻¹ aufweist, die vorzugsweise durch Umkehrosmose erreicht wird.

4. Verfahren nach Anspruch 1, dadurch gekennzeichnet, dass die Komponente zur Verhinderung der Koaleszenz des Lacks aus einem oder mehreren aliphatischen Aminen mit einem durchschnittlichen Molekulargewicht von 75 bis 133, deren Gemischen und Derivaten ausgewählt ist.

5. Verfahren nach Anspruch 1, dadurch gekennzeichnet, dass die Dispersion und/oder das Kabinenabwasser zusätzlich eine biozide Komponente enthält.

6. Verfahren nach Anspruch 1, dadurch gekennzeichnet, dass die Anreicherung des lackhaltigen Rückstands im wesentlichen bis zum Lackgehalt der frisch zugeführten Dispersion kontinuierlich erfolgt und der an Lack angereicherte Rückstand im wesentlichen kontinuierlich zum Farbspritzlackieren wiederverwendet wird.

7. Verfahren nach Anspruch 1, dadurch gekennzeichnet, dass die Anreicherung des lackhaltigen Rückstands im wesentlichen bis zum Lackgehalt der frisch zugeführten Dispersion diskontinuierlich, d.h. in Chargen erfolgt (Batch-Verfahren), wobei der an Lack angereicherte Rückstand vor seiner Wiederverwendung zum Farbspritzlackieren zwischengespeichert wird.

## Claims

1. A process for spray painting with a spraying composition consisting of a paint dispersed in water in a paint spraying booth that is provided with a cubicle with a water-rinsed rear wall for collecting and washing out of overspray in cubicle waste water, the entire cubicle waste water being separated by ultrafiltration in an ultrafiltration apparatus into permeated liquid and paint-containing residue and the paint-containing residue being enriched in the ultrafiltration apparatus with paint by removing water from the cubicle waste water until its paint content is essentially equal to that of dispersion that is freshly fed to the spray painting booth, the residue thus enriched with paint being admixed to the freshly fed dispersion for reuse in spray painting, and the permeated liquid being returned to the paint spraying booth, **characterized in that**
a) in the spraying composition there is used an oven-drying paint,
b) a component for preventing the coalescence of the paint is admixed to the dispersion fed to the paint spraying booth,
c) a component for inhibiting the drying of the paint is admixed to the dispersion fed to the paint spraying booth,
d) a glycol derivative is admixed to the cubicle waste water as a component for adjusting the flow rate in the ultrafiltration, and
e) and the conductivity of the water returned to the paint spraying booth is monitored and kept below a limit.

2. A process as claimed in claim 1, characterized in that the paint is an alkyd resin or a combination of alkyd and acrylic resin.

3. A process as claimed in claim 1, characterized in that only such water is freshly fed to the paint spraying booth which has a conductivity of less than 10⁻⁴ Ω⁻¹ cm⁻¹ preferably achieved by reverse osmosis.

4. A process as claimed in claim 1, characterized in that the component for preventing the coalescence of the paint is selected from one or more aliphatic amines having an average molecular weight of 75 to 133, their mixtures and derivatives.

5. A process as claimed in claim 1, characterized in that the dispersion and/or the cubicle waste water additionally contains a biocidal component.

6. A process as claimed in claim 1, characterized in that the enrichment of the paint-containing residue up essentially to the paint content of the freshly fed dispersion is performed in continuous manner and the paint-enriched residue is reused for spray painting in essentially continuous manner.

7. A process as claimed in claim 1, characterized in that the enrichment of the paint-containing residue up essentially to the paint content of the freshly fed dispersion is performed in discontinuous manner, i.e. in batches (batch process) with the paint-enriched residue being stored in an intermediate reservoir prior to being reused for spray painting.

## Revendications

1. Procédé pour la peinture au pistolet avec une composition de pulvérisation constituée par une laque dispersée dans l'eau dans un poste pour la peinture au pistolet qui est équipé d'une cabine à paroi dorsale à ruissellement d'eau pour recueillir et éliminer par lavage l'excès de laque (overspray) dans les eaux usées de la cabine, l'ensemble des eaux usées de la cabine étant séparées par ultrafiltration dans un mécanisme d'ultrafiltration en perméat et en résidu contenant de la laque, et en l'occurrence, le résidu contenant de la laque étant enrichi en laque dans le mécanisme d'ultrafiltration par extraction de l'eau à partir des eaux usées de la cabine jusqu'à ce que sa teneur en laque soit essentiellement égale à celle de la dispersion fraîchement approvisionnée au poste pour la peinture au pistolet, le résidu ainsi enrichi en laque étant ajouté à la dispersion fraîchement approvisionnée pour pouvoir être réutilisé à des fins de peinture au pistolet, et le perméat étant renvoyé au poste pour la peinture au pistolet, caractérisé en ce que
a) dans la dispersion, on met en oeuvre une laque séchant au four,
b) à la dispersion approvisionnant le poste pour la peinture au pistolet, on ajoute un composant pour empêcher la coalescence de la laque,
c) à la dispersion approvisionnant le poste pour la peinture au pistolet, on ajoute un composant pour inhiber le séchage,
d) aux eaux usées de la cabine, on ajoute un dérivé du glycol comme composant pour régler le débit lors de l'ultrafiltration, et
e) on surveille la conductibilité de l'eau renvoyée au poste pour la peinture au pistolet, et on la maintient en-dessous d'une valeur limite.

2. Procédé selon la revendication 1, caractérisé en ce que la laque est une résine alkyde ou une combinaison de résine alkyde et de résine acrylique.

3. Procédé selon la revendication 1, caractérisé en ce qu'on approvisionne fraîchement au poste pour la peinture au pistolet uniquement de l'eau qui présente une conductibilité inférieure à 10⁻⁴ Ω⁻¹ cm⁻¹ que l'on obtient de préférence par osmose inverse.

4. Procédé selon la revendication 1, caractérisé en ce qu'on choisit le composant pour empêcher la coalescence de la laque parmi une ou plusieurs amines aliphatiques ayant un poids moléculaire moyen de 75 à 133, leurs mélanges ou leurs dérivés.

5. Procédé selon la revendication 1, caractérisé en ce que la dispersion et/ou les eaux usées de la cabine contiennent en outre un composant biocide.

6. Procédé selon la revendication 1, caractérisé en ce que l'enrichissement du résidu contenant de la laque a lieu essentiellement en continu jusqu'à ce que l'on obtienne la teneur en laque de la dispersion fraîchement approvisionnée et on réutilise le résidu enrichi en laque essentiellement en continu pour la peinture au pistolet.

7. Procédé selon la revendication 1, caractérisé en ce que l'enrichissement du résidu contenant de la laque a lieu essentiellement en discontinu, c'est-à-dire en charges (procédé par lots) jusqu'à ce que l'on obtienne la teneur en laque de la dispersion fraîchement approvisionnée, le résidu enrichi en laque étant temporairement emmagasiné avant sa réutilisation pour la peinture au pistolet.
